# EUROPEAN PATENT SPECIFICATION

(11) **EP 4 366 023 B1**
(45) Date of publication and mention of the grant of the patent: **02.12.2026**
(21) Application number: 23816368.7
(22) Date of filing: 31.05.2023
(51) Int. Cl.: H01M 10/0565, H01M 10/0564, H01M 10/052, C08J 5/22, H01M 10/0525, H01M 10/056

(54) **POLYMER SOLID ELECTROLYTE AND MANUFACTURING METHOD THEREFOR**
POLYMERFESTELEKTROLYT UND HERSTELLUNGSVERFAHREN DAFÜR
ÉLECTROLYTE SOLIDE POLYMÈRE ET SON PROCÉDÉ DE FABRICATION

(30) Priority: 31.05.2022 KR 20220067066
(43) Date of publication of application: 08.05.2024
(73) Proprietor: LG Energy Solution, Ltd., Seoul 07335 (KR)
(72) Inventor: NAM, Sunghyun, Daejeon 34122 (KR); HAN, Hyeaeun, Daejeon 34122 (KR); KIM, Dong Kyu, Daejeon 34122 (KR)
(74) Representative: Goddar, Heinz J.
(86) International application number: PCT/KR2023/007468
(87) International publication number: WO 2023/234708

(56) References cited:
- CN-A- 110 581 315
- KR-A- 20180 076 709
- KR-A- 20190 127 604
- KR-A- 20200 033 675
- KR-A- 20200 034 284
- YIN JUANJUAN ET AL: "MXene-based film electrode and all-round hydrogel electrolyte for flexible all-solid supercapacitor with extremely low working temperature", CELL REPORTS PHYSICAL SCIENCE, vol. 3, no. 5, 1 May 2022 (2022-05-01), pages 100893, XP093115545, ISSN: 2666-3864, DOI: 10.1016/j.xcrp.2022.100893
- CHEN LI ET AL: "A PVA/LiCl/PEO interpenetrating composite electrolyte with a three-dimensional dual-network for all-solid-state flexible aluminum-air batteries", RSC ADVANCES, vol. 11, no. 62, 1 January 2021 (2021-01-01), GB, pages 39476 - 39483, XP093286056, ISSN: 2046-2069, DOI: 10.1039/D1RA07180G
- YIN JUANJUAN, WEI KUO, ZHANG JIAXIN, LIU SHIDE, WANG XINLIANG, WANG XIAOMING, ZHANG QINGRUI, QIN ZHIHUI, JIAO TIFENG: "MXene-based film electrode and all-round hydrogel electrolyte for flexible all-solid supercapacitor with extremely low working temperature", CELL REPORTS PHYSICAL SCIENCE, vol. 3, no. 5, 1 May 2022 (2022-05-01), pages 100893, XP093115545, ISSN: 2666-3864, DOI: 10.1016/j.xcrp.2022.100893

## Description

### [Technical Field]

The present invention relates to a polymer solid electrolyte and a preparation method thereof.

### [Background Art]

Since a lithium secondary battery using a liquid electrolyte has a structure in which the negative electrode and the positive electrode are partitioned by a separator, if the separator is damaged by deformation or external impact, a short circuit may occur, which may lead to dangers such as overheating or explosion. Therefore, it can be said that the development of a solid electrolyte that can secure safety in the field of the lithium secondary battery is a very important task.

A lithium secondary battery using a solid electrolyte has advantages in that the safety of the battery is increased, and the leakage of the electrolyte solution can be prevented, thereby improving the reliability of the battery and making it easy to manufacture a thin battery. In addition, since lithium metal can be used as a negative electrode, energy density can be improved, and accordingly, it is expected to be applied to high-capacity secondary batteries for electric vehicles, in addition to small secondary batteries, and is in the limelight as a next-generation battery.

Polymer materials with ion conductivity can be used as raw materials for polymer solid electrolytes, among solid electrolytes, and hybrid materials formed by mixing polymer materials and inorganic materials are also proposed. As the inorganic material, an inorganic material such as oxide or sulfide may be used.

Such a conventional polymer solid electrolyte was prepared through a high-temperature drying process after forming a coating film. However, the conventional preparation technology for the polymer solid electrolyte has limitations in that it is difficult to prepare the polymer solid electrolyte with improved ionic conductivity due to the high crystallinity of the crystalline polymer or semi-crystalline polymer. In other words, the higher the crystallization degree of the polymer, the lower the mobility of the polymer chain. Accordingly, it was difficult to improve the ionic conductivity of the polymer solid electrolyte because there was a limitation in the movement of lithium ions in the polymer solid electrolyte.

For example, conventional polymer solid electrolytes can be prepared by forming a coating film using polyvinyl alcohol (PVA) containing a hydroxyl group, which is a cross-linkable functional group, as a polymer, and then performing a high-temperature drying process. Specifically, after preparing a PVA aqueous solution by dissolving the PVA in water, the PVA aqueous solution is applied on a substrate by solution casting to form a coating film, and dried at room temperature or high temperature to form a polymer solid electrolyte in the form of a PVA film. At this time, the high temperature may mean 80 °C or higher, which is the glass transition temperature (Tg) of PVA. In the drying process, after the moisture evaporates, a hydrogen bond between the cross-linkable functional groups contained in the PVA is formed, and polymer chain folding occurs due to the hydrogen bond, and thus the crystallization degree of the polymer film increases. As the degree of crystallization increases, a polymer film with brittleness is formed. In polymer films with high degree of crystallization and brittleness, as the polymer chain mobility decreases, when there are dissociated ions in the polymer film, a phenomenon in which the ionic mobility is also remarkably reduced occurs. For this reason, the general PVA film prepared by the high-temperature drying process after forming the coating film as described above exhibits physical properties that are not suitable as polymer solid electrolytes for lithium secondary batteries.

In order to overcome these limitations of conventional polymer solid electrolytes, a technique has been developed to improve the mobility of the polymer chain and improve the ionic conductivity of the polymer solid electrolyte by adding a plasticizer to a crystalline polymer or semi-crystalline polymer. However, when a plasticizer is used, it may be difficult to set process conditions because appropriate dispersibility and solubility (miscibility) between the polymer and the plasticizer must be secured. In addition, when a liquid plasticizer is applied, compatibility with the polymer is reduced, and thus it may be difficult to perform the preparation process of the polymer solid electrolyte.

Accordingly, there is a demand for technology development that can improve the ionic conductivity of polymer solid electrolytes without additional additives such as plasticizers.

### [Prior art document]

### [Patent document]

(Patent document 1) Chinese Patent Publication No. 112259788

Cell Reports Physical Science, vol. 3, no. 5, page 100893, discloses a solid polymer electrolyte for energy storage devices based on PVA having a Mw of 145,000 g/mol. PVA/LiCl hydrogels are fabricated by repeated freeze-thaw processes of PVA/LiCl aqueous solution.

RSC Advances, vol. 11, no. 62, pages 39476-39483, discloses a secondary all solid state battery containing a polymer electrolyte prepared using PVA hydrogels fabricated by freeze-thaw processes.

CN 110581315 A discloses a manufacture of PVA based electrolyte membranes for lithium batteries. The membranes are obtained by multiple freezing and thawing cycles. The molecular weight is 60,000 to 150,000 g/mol.

KR 20190127604 A discloses a polymeric solid electrolyte comprising: a polyvinyl alcohol as a polymer resin; a lithium salt; acetonitrile; and propylene carbonate, wherein the polymeric electrolyte is crosslinked.

### [Disclosure]

### [Technical Problem]

It is an object of the present invention to provide a polymer solid electrolyte with improved ionic conductivity and a preparation method thereof.

It is another object of the present invention to provide an all-solid-state battery containing a polymer solid electrolyte with the improved ionic conductivity.

### [Technical Solution]

In order to achieve the above objects, the present invention provides a polymer solid electrolyte comprising:
a polymer containing a cross-linkable functional group;
a lithium salt; and
a solvent comprising a first solvent and a second solvent,
wherein the polymer solid electrolyte comprises a cross-linked structure; and an amorphous polymer chain containing a cross-linkable functional group,
the cross-linked structure comprises (a) a cross-linkage between cross-linkable functional groups, (b) a cross-linkage between the cross-linkable functional group and the first solvent, and (c) a bond between the cross-linkable functional group and the lithium salt,
a liquid phase evaporation rate (M(t)), which means the amount of evaporation over time of the solvent contained in the polymer solid electrolyte, is defined by Equation 1 below: <Equation 1> $\frac{M \left(t\right)}{{M}_{∞}} = 1 - \frac{8}{{Π}^{2}} {\sum }_{n = 0}^{∞} \frac{1}{{\left(2n+1\right)}^{2}} exp \left[-\frac{D {\left(2n+1\right)}^{2} {Π}^{2} t}{L}\right]$
wherein, M_{∞} is the maximum value or saturation value of a liquid phase that can be included in the polymer solid electrolyte, and is 0.2 to 0.6,
D is the diffusion coefficient of the liquid phase in the polymer solid electrolyte, and is 10⁻⁹ cm²/s to 10⁻⁶ cm²/s,
L is the thickness of the polymer solid electrolyte, and is 5 µm to 500 µm, and
t is a time at which the liquid phase evaporation rate is measured,
the content of the first solvent is 1 to 1000 ppm,
the first solvent comprises water,
the weight average molecular weight of the polymer containing the cross-linkable functional groups is 80,000 g/mol to 130,000 g/mol,
the second solvent comprises one or more selected from the group consisting of ethyl methyl carbonate (EMC), dimethyl carbonate (DMC), ethylene carbonate (EC), propylene carbonate (PC), vinylene carbonate (VC), diethyl carbonate (DEC), tetrahydrofuran (THF), 2-methyltetrahydrofuran (2-MeTHF), dioxolane (DOX), dimethoxyethane (DME), diethoxyethane (DEE), γ-butyrolactone (GBL), acetonitrile (AN), and sulfolane,
the cross-linkable functional group comprises a hydroxyl group, and the polymer containing a cross-linkable functional group comprises one or more selected from the group consisting of polyvinyl alcohol (PVA), agar, dextran, and chitosan,
the molar ratio ([Li]/[G]) of the cross-linkable functional group ([G]) of the polymer and lithium ([Li]) of the lithium salt is exceeding 0.1 and less than 0.5, and
the polymer solid electrolyte is obtainable by a method comprising the following steps:
   (S1) preparing a solution for forming a polymer solid electrolyte by adding a lithium salt to a solution which contains a polymer containing a cross-linkable functional group and a first solvent;
   (S2) forming a coating film by applying the solution for forming the polymer solid electrolyte on a substrate;
   (S3) freezing and thawing the coating film to form a cross-linked structure of the polymer containing the cross-linkable functional group, thereby preparing a first polymer solid electrolyte, wherein the cross-linked structure of the polymer comprises the lithium salt and the first solvent; and
   (S4) exchanging the first solvent in the first polymer solid electrolyte with a second solvent to prepare a second polymer solid electrolyte,
   wherein the freezing is performed at -30°C to -10°C, and the thawing is performed at 15°C to 35°

In an embodiment of the present invention, the lithium salt may include one or more selected from the group consisting of LiTFSI (Lithium bis(trifluoromethanesulphonyl)imide), LiFSI (Lithium bis (fluorosulfonyl)imide), LiNO₃, LiOH, LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, CF₃SO₃Li, LiSCN, and LiC(CF₃SO₂)₃.

In addition, the present invention provides a method for preparing the polymer solid electrolyte of the invention, including the steps of:
(S1) preparing a solution for forming a polymer solid electrolyte by adding a lithium salt to a solution which includes a polymer containing a cross-linkable functional group and a first solvent;
(S2) forming a coating film by applying the solution for forming the polymer solid electrolyte on a substrate;
(S3) freezing and thawing the coating film to form a cross-linked structure of the polymer containing the cross-linkable functional group, thereby preparing a first polymer solid electrolyte, wherein the cross-linked structure of the polymer includes the lithium salt and the first solvent; and
(S4) exchanging the first solvent in the first polymer solid electrolyte with a second solvent to prepare a second polymer solid electrolyte,
   wherein the freezing is performed at -30 °C to -10 °C, and
   the thawing is performed at 15 °C to 35 °C.

In the solvent exchange, the first solvent contained in the first polymer solid electrolyte may be dried at high temperature, and then may be immersed in the second solvent to exchange the first solvent with the second solvent.

The present invention also provides an all-solid-state battery containing the polymer solid electrolyte.

### [Advantageous Effects]

The polymer solid electrolyte according to the present invention has a high content of liquid solvent contained therein, but has a low diffusion coefficient of the solvent, thereby exhibiting the effect of confining a large amount of liquid phase inside the polymer solid electrolyte for a long time, and thus improving ion conductivity.

The polymer solid electrolyte according to the present invention has a structure in which a three-dimensional network structure formed by side branch functional groups included in the polymer and an amorphous polymer chain, and thus the crystallinity of the polymer is reduced, and thus the ionic conductivity can be improved.

In addition, the polymer solid electrolyte exhibits physical properties with reduced brittleness and increased ductility and viscosity, due to the above structural features.

In addition, the ionic conductivity of the polymer solid electrolyte can be improved through solvent exchange.

### [Best Mode]

Hereinafter, the present invention will be described in more detail to help the understanding of the present invention.

The terms and words used in the present specification and claims should not be construed as limited to ordinary or dictionary terms, and should be construed in a sense and concept consistent with the technical idea of the present invention, based on the principle that the inventor can properly define the concept of a term to describe his invention in the best way possible.

As used herein, the term "cross-linked structure" refers to a structure comprising a three-dimensional frame formed by polymer chains and an internal space of the frame. The polymer chain may be formed by cross-linkages containing cross-linkable functional groups included in the polymer. Since the cross-linked structure has a three-dimensional shape and has a form in which polymer chains are entangled with each other, it can also be referred to as a three-dimensional network structure.

### Polymer solid electrolyte

The present invention relates to a polymer solid electrolyte.

The polymer solid electrolyte of the present invention is a polymer solid electrolyte including a polymer containing a cross-linkable functional group; a lithium salt; and a solvent containing a first solvent and a second solvent, and the polymer solid electrolyte includes a cross-linked structure; and an amorphous polymer chain containing the cross-linkable functional group, and the cross-linked structure can include (a) a cross-linkage between cross-linkable functional groups, (b) a cross-linkage between the cross-linkable functional group and the first solvent, and (c) a bond between the cross-linkable functional group and the lithium salt.

According to the present invention, the polymer solid electrolyte having a cross-linked structure may have improved ionic conductivity. The degree of improvement in the ionic conductivity is related to the content of the liquid phase contained by absorption or adsorption inside the polymer solid electrolyte, and the time when the absorbed or adsorbed liquid phase is contained. That is, this means that as the amount of the liquid phase absorbed or adsorbed into the polymer sold electrolyte and the time when the liquid phase is contained increase, the ionic conductivity of the polymer solid electrolyte is also improved. At this time, the liquid phase refers to the solvent remaining after being used as a raw material in the process of preparing the polymer solid electrolyte.

When the polymer solid electrolyte has a cross-linked structure in relation to the content of the liquid phase contained by absorption or adsorption into the polymer solid electrolyte, a free volume increases compared to bulky polymer solid electrolytes having a general non-crosslinked structure. Accordingly, it can be confirmed that the amount of the liquid phase that can be absorbed or adsorbed by the increased free volume may increase, and thus the ionic conductivity of the polymer solid electrolyte is improved.

In addition, when the polymer solid electrolyte has a cross-linked structure in relation to the time when the liquid phase is contained inside the polymer solid electrolyte, the movement path of the liquid phase is complicated due to the cross-linked structure formed by cross-linking, and the diffusion of the liquid phase contained therein is difficult and the diffusion coefficient is lowered, so that the time for the liquid phase to diffuse from the inside of the polymer solid electrolyte to the outside or evaporate may be delayed. As the diffusion or evaporation of the liquid phase is delayed, the time when the solvent is included in the polymer solid electrolyte increases and an entrapment effect of confining the liquid phase in the polymer solid electrolyte increases, so that it can be confirmed that the ionic conductivity of the polymer solid electrolyte has been improved.

As such, the ionic conductivity of the polymer solid electrolyte having a cross-linked structure according to the present invention is related to the content of liquid phase included in the polymer solid electrolyte and the time when the liquid phase is included, and specifically, the time when the liquid phase is included is related to the diffusion coefficient and evaporation rate of the liquid phase.

In other words, it can be seen that the ionic conductivity of the polymer solid electrolyte having a cross-linked structure according to the present invention is improved as the content of the liquid phase that can be absorbed or adsorbed into the solid polymer electrolyte and the time when the liquid phase is included increases. Specifically, increasing the time when the liquid phase is included means that the diffusion coefficient of the liquid phase is reduced, and the evaporation rate is also slowed.

In the present invention, by quantitatively defining the characteristics of the improved ion conductivity of the polymer solid electrolyte having the cross-linked structure through the correlation between the content of the liquid phase that can be absorbed or adsorbed into the polymer solid electrolyte, the diffusion coefficient of the liquid phase, and the evaporation rate, the polymer solid electrolyte satisfying their correlation may be maintained to always exhibit ion conductivity of a certain level or more.

In the present invention, the liquid phase evaporation rate (M(t)), which means the evaporation amount over time of the solvent contained in the polymer solid electrolyte, may be defined by Equation 1 below: <Equation 1> $\frac{M \left(t\right)}{{M}_{∞}} = 1 - \frac{8}{{Π}^{2}} {\sum }_{n = 0}^{∞} \frac{1}{{\left(2n+1\right)}^{2}} exp \left[-\frac{D {\left(2n+1\right)}^{2} {Π}^{2} t}{L}\right]$
wherein, M_{∞} means a maximum value or a saturation value of the liquid phase that can be included in the polymer solid electrolyte, and is 0.2 to 0.6,
D means a diffusion coefficient of the liquid phase in the polymer solid electrolyte, and is 10⁻⁹ cm²/s to 10⁻⁶ cm²/s,
L means the thickness of the polymer solid electrolyte, and is 5 µm to 500 µm, and
t means the time at which the liquid phase evaporation rate is measured.

The liquid phase includes a second solvent.

In the present invention, in Equation 1, the liquid phase evaporation rate (M(t)), which means the amount of evaporation of the solvent over time, can be measured experimentally, and the measured liquid phase evaporation rate (M(t)) is applied to Equation 1 to derive M_{∞} and D, which is used as a fitting parameter, thereby predicting whether and how to form a cross-linked structure of the polymer solid electrolyte, and based on this, determining the degree of improvement in ionic conductivity. That is, in the graph derived by applying the experimentally measured M(t) to Equation 1, the optimal M_{∞} and D that match the graph of Equation 1 can be obtained in the process of fitting by changing M_{∞} and D.

In this case, the M(t) may be measured by monitoring the weight of the liquid phase evaporated over time while heating the polymer solid electrolyte specimen using a scale. For example, the M(t) can be measured by monitoring the weight of the liquid phase evaporated over time while heating the specimen at a temperature of 55 to 70 °C or 60 °C using a heating electronic scale (MS-70 by AND company).

In addition, the M_{∞} is the maximum value or saturation value of the liquid phase that can be included in the polymer solid electrolyte, and if the M_{∞} is less than 0.2, it is difficult to sufficiently impregnate the desired amount of liquid phase into the polymer solid electrolyte, and thus ionic conductivity may decrease. If the M_{∞} exceeds 0.6, mechanical properties of the polymer solid electrolyte are deteriorated due to excessive liquid phase impregnation, and properties close to a gel rather than a polymer solid electrolyte membrane or film are shown. The M_{∞} is used as a fitting parameter when fitting the experimentally measured M(t) value to Equation 1.

In addition, the D is a diffusion coefficient of the liquid phase included in the polymer solid electrolyte, which may be 10⁻⁹ cm²/s to 10⁻⁶ cm²/s, which is a general diffusion coefficient of the liquid phase. If the D is less than 10⁻⁹ cm²/s, it may be difficult to include the liquid phase in the polymer solid electrolyte itself. If the D exceeds 10⁻⁶ cm²/s, it may be difficult to describe the effect of improving the ionic conductivity of the polymer solid electrolyte by including the liquid phase because the diffusion and evaporation rates of the liquid phase present inside the polymer solid electrolyte increase. The D is used as a fitting parameter when fitting the experimentally measured M(t) value to Equation 1.

In addition, the L is the thickness of the polymer solid electrolyte, which may be 5 *µ*m to 500 *µ*m, and may be measured using a general micrometer or by analyzing the polymer solid electrolyte section with a scanning electron microscope (SEM). If the L is less than 5 *µ*m, the mechanical strength of the polymer solid electrolyte is reduced due to swelling by the liquid phase, making it difficult to handle or may be destroyed. If the L exceeds 500 µm, battery performance may be degraded.

In addition, the n is any integer. The n is not limited to a specific numerical range, but may be an integer from 5 to 1000, and the accuracy of calculation may increase as the value of n increases.

In addition, the t means the time at which the liquid phase evaporation rate (M(t)) is measured. The t is not particularly limited, and may be, for example, 1 minute to 6 hours.

In the present invention, the polymer solid electrolyte having a cross-linked structure is in the form of a porous polymer matrix, and the ratio of the diffusion coefficient (D_{P}) of the porous polymer matrix to the diffusion coefficient (D_{NP}) of the non-porous polymer matrix may be D_{P}/D_{NP} ≤ 0.5. When such a diffusion coefficient ratio is satisfied, a liquid component contained in the pores inside the porous polymer matrix having the cross-linked structure is delayed in desorption and evaporation to the outside of the polymer matrix, so that it can stay for a long time.

In the present invention, (a) the cross-linkage between cross-linkable functional groups may comprise a hydrogen bond between cross-linkable functional groups, and for example, the hydrogen bond may be a hydrogen bond between OH- groups.

If the cross-linked structure is formed only by (a) the cross-linkage between cross-linkable functional groups, crystallinity of the polymer solid electrolyte may be generated, and thus ionic conductivity may be reduced.

However, since the cross-linked structure comprises not only (a) the cross-linkage between cross-linkable functional groups, but also (b) the cross-linkage between the cross-linkable functional group and the first solvent, and (c) the bond between the cross-linkable functional group and the lithium salt, the generation of crystallinity of the polymer solid electrolyte can be prevented.

In the present invention, (b) the cross-linkage between the cross-linkable functional group and the first solvent may comprise a hydrogen bond, for example, the hydrogen bond may be a hydrogen bond between OH- and H+. At this time, H+ may be derived from a water solvent.
(b) the cross-linkage between the cross-linkable functional group and the first solvent may mean a hydrogen bond between a part of the solvent remaining in the freezing and thawing processes and the cross-linkable functional group.

In addition, (b) the cross-linkage between the cross-linkable functional group and the first solvent interferes with the cross-linkage between (a) the cross-linkable functional groups, so that the cross-linked structure does not consist only of the cross-linkage between (a) the cross-linkable functional groups, and thus the increase in crystallinity of the polymer solid electrolyte can be prevented.

In the present invention, (c) the bond between the cross-linkable functional group and the lithium salt may comprise a bond by Lewis acid-base interaction, and for example, the bond may be a bond between OH- and Li+.
(c) the bond between the cross-linkable functional group and the lithium salt is a bond by Lewis acid-base interaction, and may be a type of bond such as a metal-ligand bond.

In addition, (c) the bond between the cross-linkable functional group and the lithium salt interferes with (a) the cross-linkage between cross-linkable functional groups and (b) the cross-linkage between the cross-linkable functional group and the first solvent, so that the cross-linked structure does not consist only of the cross-linkage between (a) the cross-linkable functional groups, and thus the generation of crystallinity of the polymer solid electrolyte can be prevented, and at the same time, the formation of amorphous polymer chains can be promoted. As the amorphous polymer chain is formed, the mobility of the polymer chain is improved, and thus the hopping effect of the lithium ion is increased, so that the ionic conductivity of the polymer solid electrolyte can be improved.

In the present invention, the amorphous polymer chain may also be formed in a freezing process as described later, and refers to a polymer chain that does not form crystals by regular folding of the polymer chain and exists in a free behavior state. That is, the amorphous polymer chain may include a polymer containing a cross-linkable functional group that does not form bonds as in the (a), (b) and (c).

Due to the cross-linked structure, the polymer solid electrolyte is not easily broken or destroyed and thus can play a role as a support for an electrolyte containing lithium ions stably.

In addition, due to the amorphous polymer chain, since the polymer solid electrolyte exhibits elasticity, it can minimize brittleness, which is a property of being easily broken, and since the mobility of the polymer chain is excellent and the mobility of lithium ions inside the electrolyte is improved, the polymer solid electrolyte with improved ionic conductivity can be provided.

In the present invention, the cross-linkable functional group contained in the polymer containing the cross-linkable functional group may have a property capable of forming a cross-linked structure by forming bonds as in the (a), (b) and (c).

In addition, the weight average molecular weight (Mw) of the polymer containing the cross-linkable functional group is 80,000 g/mol to 130,000 g/mol, and specifically, may be 80,000 g/mol or more, 83,000 g/mol or more or 85,000 g/mol or more, and 90,000 g/mol or less, 110,000 g/mol or less or 130,000 g/mol or less. If the weight average molecular weight (Mw) of the polymer containing the cross-linkable functional group is less than 80,000 g/mol, the bond by the cross-linkable functional group may not be sufficiently formed to obtain a cross-linked structure. If the weight average molecular weight (Mw) of the polymer containing the cross-linkable functional group exceeds 130,000 g/mol, the entanglement of the polymer chain is increased in the polymer solution used in the preparation process, and the penetration rate of the solvent into the polymer chain is decreased. Accordingly, gelation of the polymer is accelerated, and thus the solubility of the polymer is lowered and the bonding by the cross-linkable functional group cannot be performed smoothly, so the formation of a cross-linked structure may not be easy.

In addition, the polymer containing the cross-linkable functional group may have characteristic in that the bonds (a), (b) and (c) are well formed by the cross-linkable functional group contained in the phase separated polymer upon freezing because phase separation between the polymer and the solvent is smoothly performed in the polymer solution used in the preparation process.

Preferably, the polymer containing the cross-linkable functional group may be PVA, and the PVA can be efficiently phase separated from the solvent upon freezing in the preparation process of the polymer solid electrolyte and it may be advantageous in forming a cross-linked structure by the bonds (a), (b) and (c) induced from the cross-linkable functional group of PVA phase separated from the solvent.

In the present invention, the lithium salt is included in a dissociated state in the inner space of the cross-linked structure, thereby improving the ionic conductivity of the polymer solid electrolyte.

In addition, the lithium salt can form (c) the bond between the cross-linkable functional group and the lithium salt, thereby preventing the generation of crystallinity of the polymer solid electrolyte and promoting the formation of an amorphous polymer chain at the same time.

The lithium salt may include one or more selected from the group consisting of (CF₃SO₂)₂NLi(Lithium bis(trifluoromethanesulphonyl)imide, LiTFSI), (FSO₂)₂NLi(Lithium bis (fluorosulfonyl)imide, LiFSI), LiNO₃, LiOH, LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, CF₃SO₃Li, LiSCN and LiC(CF₃SO₂)₃.

In the present invention, the molar ratio ([Li]/[G]) of the cross-linkable functional group ([G]) of the polymer containing the cross-linkable functional group and lithium ([Li]) of the lithium salt contained in the polymer solid electrolyte is exceeding 0.1 and less than 0.5, and specifically may be exceeding 0.1, 0.2 or more, or 0.3 or more, and may be 0.4 or less, or 0.5 or less. If the molar ratio ([Li]/[G]) is 0.1 or less, as the content of the lithium salt is reduced, the ionic conductivity of the polymer solid electrolyte may be lowered. If the molar ratio ([Li]/[G]) is 0.5 or more, the content of the polymer containing the cross-linkable functional group is reduced, so that the bonds (a), (b) and (c) may not be sufficiently formed and thus crystallinity may be increased and ionic conductivity may be decreased. If the cross-linkable functional group is a hydroxyl group (OH-), the [G] may be expressed as [OH] or [O].

In an embodiment of the present invention, the solvent is contained inside the cross-linked structure formed by the physical cross-linkage of the polymer solid electrolyte, so that the solvent exchange process is easily performed, thereby improving the ionic conductivity of the polymer solid electrolyte.

The solvent comprises a first solvent and a second solvent.

The first solvent and the second solvent are solvents that are distinct from each other, and may have different solubility for the polymer containing the cross-linkable functional group.

The first solvent has high solubility for the polymer containing the cross-linkable functional group and can form a cross-linked structure with the polymer containing the cross-linkable functional group. On the other hand, since the second solvent has low solubility for the polymer containing the cross-linkable functional group, it is difficult to form a cross-linked structure with the polymer containing the cross-linkable functional group.

In addition, the first solvent and the second solvent may be solvents classified into an aqueous electrolyte solution or a non-aqueous electrolyte solution depending on the structure of the battery.

In addition, the first solvent and the second solvent may be solvents distinguished from each other depending on the flame-retardant electrolyte.

The first solvent comprises water.

The boiling point of the first solvent may be 150 °C or less. The boiling point of the first solvent may be lower than that of the second solvent. If the boiling point of the first solvent exceeds 150 °C, the hydrogen bond formed inside the polymer and the Lewis acid-base interaction force are disrupted during the removal process of the first solvent, and thus the mechanical properties of the polymer solid electrolyte may be greatly deteriorated.

The first solvent can form a cross-linked structure through a freezing/thawing process after dissolving a polymer containing a cross-linkable functional group. For example, if the first solvent is water, phase separation from a polymer containing a cross-linkable functional group occurs distinctly during the freezing process, and an ice phase and a rich phase of a polymer containing a cross-linkable functional group may be formed.

Replacing the first solvent with the second solvent is to use the polymer solid electrolyte according to the present invention in battery chemistry vulnerable to water. For example, if water is used as the first solvent, there is no problem in battery chemistry that does not show degradation in properties by aqueous electrolytes, but in battery chemistry that is vulnerable to water, there is a problem that the performance of the battery is deteriorated or the battery does not operate. In order to solve this problem, it is possible to provide a polymer solid electrolyte capable of stably operating the battery by removing the first solvent and replacing it with the second solvent usable inside the battery without loss of ionic conductivity.

In addition, if the first solvent is used, there is no problem in the preparation of the solid electrolyte, but there may be a problem that the solvent is vulnerable to combustion in the event of a fire or explosion of the battery, causing greater damage. In order to solve this problem, it is possible to provide a polymer solid electrolyte capable of stably operating the battery by removing the first solvent and replacing it with the second solvent having flame retardant properties.

In addition, if the first solvent is used, there is no problem with the preparation of the solid electrolyte, but when the first solvent is applied as an electrolyte inside the battery, there may be a problem of reducing the lifetime of the product due to unexpected side reactions and decomposition of the solvent during the operation of the battery. In order to solve this problem, it is possible to provide a polymer solid electrolyte capable of stably operating the battery by removing the first solvent and replacing it with the second solvent which is stable from side reactions with the solvent.

The second solvent comprises one or more selected from the group consisting of ethyl methyl carbonate (EMC), dimethyl carbonate (DMC), ethylene carbonate (EC), propylene carbonate (PC), vinylene carbonate (VC), diethyl carbonate (DEC), tetrahydrofuran (THF), 2-methyltetrahydrofuran (2-MeTHF), dioxolane (DOX), dimethoxyethane (DME), diethoxyethane (DEE), γ-butyrolactone (GBL), acetonitrile (AN) and sulfolane, or a combination thereof. For example, it may comprise EC: EMC (1: 3), EC: EMC (1: 1), EC: DMC: EMC: FEC (3: 3: 3: 1), etc., but is not limited to these examples only.

The content of the first solvent in the polymer solid electrolyte is 1 to 1000 ppm. If the content of the first solvent exceeds 1000 ppm, there is a problem in that absorption of the second solvent is inhibited, thereby reducing physical properties expected from the second solvent, for example, ionic conductivity or reducing stability of the battery.

In the present invention, the polymer solid electrolyte may be in the form of a free-standing film or a coating layer. The free-standing film refers to a film capable of maintaining a film shape by itself without a separate support at room temperature and pressure. The coating layer means a layer obtained by coating on a substrate.

The free-standing film or coating layer exhibits elasticity to minimize brittleness and has characteristics as a support that stably contains lithium ions, and thus it can be in a suitable form as a polymer solid electrolyte.

### Preparation method of polymer solid electrolyte

The method for preparing the polymer solid electrolyte according to an embodiment of the present invention may comprise the following steps:
(S1) preparing a solution for forming a polymer solid electrolyte by adding a lithium salt to a solution which contains a polymer containing a cross-linkable functional group and a first solvent;
(S2) forming a coating film by applying the solution for forming the polymer solid electrolyte on a substrate;
(S3) freezing and thawing the coating film to form a cross-linked structure of the polymer containing the cross-linkable functional group, thereby preparing a first polymer solid electrolyte, wherein the cross-linked structure of the polymer comprises the lithium salt and the first solvent; and
(S4) exchanging the first solvent in the first polymer solid electrolyte with a second solvent to prepare a second polymer solid electrolyte, wherein the freezing is performed at -30 °C to -10 °C, and
the thawing is performed at 15 °C to 35 °C.

In the preparation method of the polymer solid electrolyte, the plasticizer used to reduce the crystallinity of the polymer is not added, and crystallization of the polymer can be prevented by inducing (a) a cross-linkage between cross-linkable functional groups, (b) a cross-linkage between the cross-linkable functional group and the first solvent, and (c) a bond between the cross-linkable functional group and the lithium salt, by the cross-linkable functional group contained in the polymer through the freezing process, and as a result, the polymer solid electrolyte with improved ionic conductivity can be prepared. Hereinafter, the method for preparing a polymer solid electrolyte according to the present invention will be described in detail for each step.

In an embodiment of the present invention, in the (S1), a solution for forming a polymer solid electrolyte can be prepared by adding a lithium salt to a solution which contains a polymer containing the cross-linkable functional group and a first solvent.

The polymer, the first solvent, and the lithium salt are as described above.

The concentration of the solution of the polymer containing the cross-linkable functional group can be appropriately adjusted in consideration of the extent to which the coating process can proceed smoothly, when the solution for forming the polymer solid electrolyte is applied to the substrate. For example, the concentration of the solution of the polymer containing the cross-linkable functional group may be 5% to 20%, and specifically may be 5% or more, 7% or more or 9% or more, and may be 13% or less, 17% or less or 20 % or less. If the concentration of the solution of the polymer containing the cross-linkable functional group is less than 5%, the concentration is too dilute and thus it may flow down when applied on the substrate. If the concentration of the solution of the polymer containing the cross-linkable functional group exceeds 20%, it is difficult to dissolve the lithium salt at a desired concentration in the solution of the polymer, and it may be difficult to apply it in the form of a uniform thin film due to its high viscosity.

In an embodiment of the present invention, in the step (S2), a coating film may be formed by applying the solution for forming the polymer solid electrolyte on the substrate.

The substrate is not particularly limited as long as it can serve as a support on which the solution for forming the polymer solid electrolyte is applied. For example, the substrate may be stainless steel (SS), a polyethylene terephthalate film, a polytetrafluoroethylene film, a polyethylene film, a polypropylene film, a polybutene film, a polybutadiene film, a vinyl chloride copolymer film, a polyurethane film, an ethylenevinyl acetate film, an ethylene-propylene copolymer film, an ethylene-ethyl acrylate copolymer film, an ethylene-methyl acrylate copolymer film, or a polyimide film.

In addition, the coating method is not particularly limited as long as it is a method capable of applying the solution for forming the polymer solid electrolyte in the form of a film on the substrate. For example, the coating method may be bar coating, roll coating, spin coating, slit coating, die coating, blade coating, comma coating, slot die coating, lip coating, or solution casting.

In an embodiment of the present invention, in the step (S3), a first polymer solid electrolyte can be prepared by freezing and thawing the coating film to form a cross-linked structure of the polymer containing the cross-linkable functional group, wherein the cross-linked structure of the polymer includes the lithium salt and the first solvent.

In the freezing process, the polymer and water contained in the aqueous solution of the polymer containing the cross-linkable functional group used to form the coating film may be phase separated. The phase separation may be induced because the strength of the hydrogen bond between the water molecules is stronger than that between the cross-linkable functional group and the water molecules. Water molecules aggregated by hydrogen bonds between the water molecules exist in the ice phase by a freezing process. As a result, the number of cross-linkable functional groups forming hydrogen bonds through interaction with the water molecules is significantly reduced.

Due to the phase separation, the inside of the coating film is divided into (i) a polymer-poor phase and (ii) a polymer-rich phase.

The (i) polymer-poor phase is a portion containing water molecules aggregated by hydrogen bonds between water molecules and exists as an ice phase, which can also be referred to as a free water state.

The (ii) polymer-rich phase is a portion containing a polymer phase separated from water. The phase-separated polymer is a polymer containing a cross-linkable functional group that is free from interaction with water molecules, and is in a free state after phase separation, does not form crystals by regular folding, and exists in an amorphous state with relatively free behavior, which is called an amorphous polymer chain.

In addition, some of the cross-linkable functional groups contained in the phase separated polymer form localized crystallites. The localized crystallites act as a cross-linkable junction point to form a cross-linked structure including the bonds (a), (b) and (c).

In addition, in the thawing process after the freezing process, the ice contained in the (i) polymer-poor phase melts and evaporates, and thus a polymer solid electrolyte with an increased free volume can be prepared.

In addition, the freezing may be performed by appropriately selecting conditions sufficient to freeze the coating film. The freezing is performed at a temperature of -30 °C to -10 °C, and specifically, the freezing temperature may be -30 °C or higher, -25 °C or higher, or -23 °C or higher, and may be -18 °C or lower, -15 °C or lower or -10 °C or lower. If the freezing temperature is less than -30 °C, cracks may occur in the coating film. If the freezing temperature exceeds -10 °C, formation of regions of amorphous polymer chains can be difficult because sufficient phase separation between the polymer and water is not achieved. In addition, the freezing may be performed in consideration of a sufficient freezing time within the range of 20 hours to 30 hours.

In addition, the thawing can be performed by appropriately selecting conditions capable of thawing to the extent that the frozen coating film can be applied as a polymer solid electrolyte. The thawing temperature is 15 °C to 35 °C or may be room temperature (25 °C). If the thawing temperature is less than 15 °C, moisture drying efficiency may decrease after thawing (ice melting). If the thawing temperature exceeds 35 °C, the coating film may shrink and thus cause wrinkles or warping.

In an embodiment of the present invention, in the step (S4), the second polymer solid electrolyte can be prepared by exchanging the first solvent in the first polymer solid electrolyte with a second solvent.

The first solvent and the second solvent are as described above.

The solvent exchange means removing the first solvent in the first polymer solid electrolyte and exchanging it so that the second solvent exists mostly. The second polymer solid electrolyte containing the second solvent can be prepared by solvent exchange as described above.

In the solvent exchange, the first solvent contained in the first polymer solid electrolyte may be dried at high temperature and it may be immersed in the second solvent to exchange the first solvent with the second solvent. More specifically, the first polymer solid electrolyte containing the first solvent may be placed in a vacuum oven, dried at a low temperature (50 °C) for 6 hours, then dried at a high temperature (100 °C) for 12 hours, and then immersed the first solid electrolyte dried in a dry room environment in the second solvent at room temperature for 24 hours, thereby exchanging the first solvent with the second solvent.

In the present invention, after the step (S4), the step of (S5) measuring the liquid phase evaporation rate (M(t)) of the polymer solid electrolyte and then applying Equation 1 above to fit M_{∞} and D is further performed, so that a polymer solid electrolyte having an ionic conductivity of a certain level or more may be prepared.

### All-solid-state battery

The present invention also relates to an all-solid-state battery including the polymer solid electrolyte, wherein the all-solid-state battery includes an negative electrode, a positive electrode, and a polymer solid electrolyte interposed between the negative electrode and the positive electrode, and the solid electrolyte has the above-described characteristics.

Specifically, the polymer solid electrolyte may be suitable as an electrolyte for an all-solid-state battery because physical cross-linkage is formed through the freezing and thawing processes and thus crystallinity is lowered, and ionic conductivity is improved through a solvent exchange process.

In the present invention, the positive electrode contained in the all-solid-state battery includes a positive electrode active material layer, and the positive electrode active material layer may be formed on one surface of the positive electrode current collector.

The positive electrode active material layer includes a positive electrode active material, a binder, and a conductive material.

In addition, the positive electrode active material is not particularly limited as long as it is a material capable of reversibly intercalating and de-intercalating lithium ions, and for example, may be, but is not limited to, layered compounds or compounds substituted with one or more transition metals, such as lithium cobalt oxide (LiCoO₂), lithium nickel oxide (LiNiO₂), Li[NiₓCo_{y}Mn_{z}Mᵥ]O₂ (wherein, M is any one or two or more elements selected from the group consisting of Al, Ga and In; 0.3≤x<1.0, 0≤y, z≤0.5, 0≤v≤0.1, x+y+z+v=1), Li(LiₐM_{b-a-b'}M'_{b'})O₂-_{c}A_{c}(wherein, 0≤a≤0.2, 0.6≤b≤1, 0≤b'≤0.2, 0≤c≤0.2; M comprises Mn and one or more selected from the group consisting of Ni, Co, Fe, Cr, V, Cu, Zn and Ti; M' is one or more selected from the group consisting of Al, Mg and B, and A is one or more selected from the group consisting of P, F, S and N); lithium manganese oxide such as Formula Li_{1+y}Mn_{2-y}O₄ (wherein, y is 0 - 0.33), LiMnO₃, LiMn₂O₃, LiMnO₂; lithium copper oxide (Li₂CuO₂); vanadium oxide such as LiV₃O₈, LiFe₃O₄, V₂O₅, Cu₂V₂O₇; Ni site type lithium nickel oxide represented by Formula LiNi_{1-y}MyO₂ (wherein, M=Co, Mn, Al, Cu, Fe, Mg, B or Ga, y=0.01 - 0.3); lithium manganese composite oxide represented by Formula LiMn_{2-y}M_{y}O₂ (wherein, M=Co, Ni, Fe, Cr, Zn or Ta, y=0.01 - 0.1) or Li₂Mn₃MO₈ (wherein, M=Fe, Co, Ni, Cu or Zn); LiMn₂O₄ in which part of Li in the Formula is substituted with alkaline earth metal ions; disulfide compounds; and Fe₂(MoO₄)₃.

In addition, the positive electrode active material may be contained in an amount of 40 to 80% by weight based on the total weight of the positive electrode active material layer. Specifically, the content of the positive electrode active material may be 40% by weight or more or 50% by weight or more, and may be 70% by weight or less or 80% by weight or less. If the content of the positive electrode active material is less than 40% by weight, the connectivity between the wet positive electrode active material layer and the dry positive electrode active material layer may be insufficient. If the content of the positive electrode active material exceeds 80 % by weight, mass transfer resistance may be increased.

In addition, the binder is a component that assists bonding between the positive electrode active material and the conductive material, and assists in bonding to the current collector. The binder may comprise one or more selected from the group consisting of styrene-butadiene rubber, acrylated styrene-butadiene rubber, acrylonitrile copolymer, acrylonitrile-butadiene rubber, nitrile butadiene rubber, acrylonitrile-styrene-butadiene copolymer, acrylic rubber, butyl rubber, fluorine rubber, polytetrafluoroethylene, polyethylene, polypropylene, ethylene/propylene copolymer, polybutadiene, polyethylene oxide, chlorosulfonated polyethylene, polyvinylpyrrolidone, polyvinylpyridine, polyvinyl alcohol, polyvinyl acetate, polyepichlorohydrin, polyphosphazene, polyacrylonitrile, polystyrene, latex, acrylic resin, phenolic resin, epoxy resin, carboxymethylcellulose, hydroxypropyl cellulose, cellulose acetate, cellulose acetate butyrate, cellulose acetate propionate, cyanoethyl cellulose, cyanoethyl sucrose, polyester, polyamide, polyether, polyimide, polycarboxylate, polycarboxylic acid, polyacrylic acid, polyacrylate, lithium polyacrylate, polymethacrylic acid, polymethacrylate, polyacrylamide, polyurethane, polyvinylidene fluoride, and poly(vinylidene fluoride)-hexafluoropropene. Preferably, the binder may comprise one or more selected from the group consisting of styrene-butadiene rubber, polytetrafluoroethylene, carboxymethyl cellulose, polyacrylic acid, lithium polyacrylate, and polyvinylidene fluoride.

In addition, the binder may be contained in an amount of 1% by weight to 30% by weight based on the total weight of the positive electrode active material layer, and specifically, the content of the binder may be 1% by weight or more or 3% by weight or more, and may be 15% by weight or less or 30% by weight or less. If the content of the binder is less than 1% by weight, the adhesive force between the positive electrode active material and the positive electrode current collector may be lowered. If the content of the binder exceeds 30% by weight, the adhesive force is improved, but the content of the positive electrode active material is reduced by that amount, and thus the capacity of the battery may be lowered.

In addition, the conductive material is not particularly limited as long as it prevents side reactions in the internal environment of the all-solid-state battery and has excellent electrical conductivity without causing chemical changes in the battery. The conductive material may be typically graphite or conductive carbon, and for example, graphite such as natural graphite, artificial graphite; carbon black such as carbon black, acetylene black, Ketjen black, Denka black, thermal black, channel black, furnace black, lamp black, thermal black; carbon-based materials whose crystal structure is graphene or graphite; conductive fibers such as carbon fibers and metal fibers; carbon fluoride; metal powders such as aluminum powder and nickel powder; conductive whiskers such as zinc oxide and potassium titanate; conductive oxides such as titanium oxide; and conductive polymers such as polyphenylene derivatives may be used alone or in combination of two or more thereof as the conductive material, but is not necessarily limited thereto.

The conductive material may be generally contained in an amount of 0.5% by weight to 30% by weight based on the total weight of the positive electrode active material layer, and specifically, the content of the conductive material may be 0.5% by weight or more or 1% by weight or more, and may be 20% by weight or less or 30% by weight or less. If the content of the conductive material is too small, i.e., less than 0.5 % by weight, it is difficult to expect an effect of improving electrical conductivity or the electrochemical properties of the battery may be deteriorated. If the content of the conductive material exceeds 30% by weight and thus is too large, the amount of the positive electrode active material may be relatively small, so that the capacity and energy density may be lowered. A method for incorporating the conductive material to the positive electrode is not particularly limited, and a conventional method known in the art, such as coating on the positive electrode active material, may be used.

In addition, the positive electrode current collector supports the positive electrode active material layer, and serves to transfer electrons between the external conductive wire and the positive electrode active material layer.

The positive electrode current collector is not particularly limited as long as it has high electrical conductivity without causing chemical changes in the all-solid-state battery. For example, as the positive electrode current collector, copper, stainless steel, aluminum, nickel, titanium, palladium, sintered carbon; a copper or stainless steel surface-treated with carbon, nickel, silver, etc.; an aluminum-cadmium alloy, etc. may be used.

The positive electrode current collector may have a fine irregularity structure on the surface of the positive electrode current collector or have a three-dimensional porous structure, in order to strengthen the bonding force with the positive electrode active material layer. Accordingly, the positive electrode current collector may comprise various forms such as a film, a sheet, a foil, a mesh, a net, a porous body, a foam, and a non-woven fabric.

The positive electrode as described above may be prepared by the conventional method, and specifically, the positive electrode is manufactured by coating and drying a composition for forming the positive electrode active material layer prepared by mixing the positive electrode active material, the conductive material and the binder in an organic solvent, onto the positive electrode current collector, and optionally compression-molding it onto the current collector to improve the electrode density. At this time, as the organic solvent, it is preferable to use one that can uniformly disperse the positive electrode active material, the binder, and the conductive material and that evaporates easily. Specifically, acetonitrile, methanol, ethanol, tetrahydrofuran, water, isopropyl alcohol and the like are exemplified.

In the present invention, the negative electrode comprised in the all-solid-state battery comprises an negative electrode active material layer, and the negative electrode active material layer may be formed on one surface of the negative electrode current collector.

The negative electrode active material may be a material capable of reversibly intercalating or de-intercalating lithium ion (Li⁺), a material capable of reacting with lithium ion to reversibly form a lithium-containing compound, lithium metal or a lithium alloy.

The material capable of reversibly intercalating or de-intercalating lithium ion (Li⁺) may be, for example, crystalline carbon, amorphous carbon or mixtures thereof. The material capable of reacting with the lithium ion (Li⁺) to reversibly form a lithium-containing compound may be, for example, tin oxide, titanium nitrate, or silicon. The lithium alloy may be, for example, an alloy of lithium (Li) and the metal selected from the group consisting of sodium (Na), potassium (K), rubidium (Rb), cesium (Cs), francium (Fr), beryllium (Be), magnesium (Mg), calcium (Ca), strontium (Sr), barium (Ba), radium (Ra), aluminum (Al), and tin (Sn).

Preferably, the negative electrode active material may be lithium metal, and specifically, may be in the form of a lithium metal thin film or lithium metal powder.

The negative electrode active material may be contained in an amount of 40 to 80% by weight based on the total weight of the negative electrode active material layer. Specifically, the content of the negative electrode active material may be 40 % by weight or more or 50 % by weight or more, and may be 70 % by weight or less or 80 % by weight or less. If the content of the negative electrode active material is less than 40% by weight, the connectivity between the wet negative electrode active material layer and the dry negative electrode active material layer may be insufficient. If the content of the negative electrode active material exceeds 80 % by weight, mass transfer resistance may be increased.

In addition, the binder is the same as described above for the positive electrode active material layer.

In addition, the conductive material is the same as described above for the positive electrode active material layer.

In addition, the negative electrode current collector is not particularly limited as long as it has conductivity without causing chemical change in the battery, and for example, the negative electrode current collector may be copper, stainless steel, aluminum, nickel, titanium, sintered carbon; copper or stainless steel surface-treated with carbon, nickel, titanium, silver, etc.; or aluminum-cadmium alloy. In addition, the negative electrode current collector may be used in various forms, such as a film having fine irregularity on its surface, a sheet, a foil, a net, a porous body, a foam, and a non-woven fabric, as in the positive electrode current collector.

The manufacturing method of the negative electrode is not particularly limited, and may be manufactured by forming an negative electrode active material layer on an negative electrode current collector using a layer or film formation method commonly used in the art. For example, a method such as pressing, coating, or vapor deposition may be used. Also, a case where a thin film of a metal lithium is formed on a metal plate by initial charging after assembling the battery without a lithium thin film on the negative electrode current collector is also included in the negative electrode of the present invention.

In addition, the present invention provides a battery module comprising the all-solid-state battery as a unit cell, a battery pack comprising the battery module, and a device comprising the battery pack as a power source.

In this case, examples of the above device may comprise, but are not limited to, a power tool powered by an electric motor; electric cars including an electric vehicle (EV), a hybrid electric vehicle (HEV), a plug-in hybrid electric vehicle (PHEV), and the like; electric motorcycles including an electric bike (E-bike) and an electric scooter (E-scooter); an electric golf cart; and a power storage system. Hereinafter, preferred examples are presented to aid understanding of the present invention, but the following examples are only illustrative of the present invention, and it will be apparent to those skilled in the art that various changes and modifications can be made within the scope and technical idea of the present invention, and also it is natural that such variations and modifications are within the scope of the appended claims.

Hereinafter, preferred examples are presented to aid understanding of the present invention, but the following examples are provided only to facilitate understanding of the present invention, and the present invention is not limited thereto.

In the following Examples and Comparative Examples, polymer solid electrolytes comprising a polymer containing a cross-linkable functional group, a lithium salt, and a solvent as described in Table 1 below were prepared.

**Table 1:**

| | **Polymer** | **Lithium salt** | **[Li]/[O]** | **Whether or not the freezing/thawing process is applied** | **First solvent** | **Second solvent** |
|---|---|---|---|---|---|---|
| **Example 1** | PVA | LiTFSI | 0.4 | applied | water (H₂O) | EMC |
| **Comparative Example 1** | PVA | LiTFSI | 0.4 | non-applied (80 °C dry) | water (H₂O) | EMC |
| **Comparative Example 2** | PVA | LiTFSI | 0.4 | non-applied (25 °C drying) | water (H₂O) | EMC |

### Examples

### Example 1: Preparation of polymer solid electrolyte

PVA (Mw: 89,000 g/mol; degree of hydrolysis: > 99%) was mixed with water to prepare a 10% PVA aqueous solution. LiTFSI was added to the PVA aqueous solution, and then stirred to prepare a solution containing PVA, which is a polymer having a cross-linkable functional group, and LiTFSI, which is a lithium salt. At this time, the molar ratio ([Li]/[O]) of "O" contained in the cross-linkable functional group of the PVA and "Li" contained in the lithium salt was set to 0.4.

The solution was applied on SS foil, which is a substrate, by a bar coating method to form a coating film, and then, it was frozen at -20 °C for 24 hours and thawed at 25 °C to prepare a polymer solid electrolyte.

After removing water (H₂O), which is a first solvent, from the inside of the prepared polymer solid electrolyte, ethyl methyl carbonate (EMC), which is a second solvent, was added to prepare the polymer solid electrolyte.

### Comparative Examples

### Comparative Example 1

A polymer solid electrolyte was prepared in the same manner as in Example 1, except that a solution containing PVA, which is a polymer with a cross-linkable functional group, and LiTFSI, which is a lithium salt, was applied on SS foil, which is a substrate, and then dried at 80 °C without freezing and thawing processes.

### Comparative Example 2

A polymer solid electrolyte was prepared in the same manner as in Example 1, except that a solution containing PVA, which is a polymer with a cross-linkable functional group, and LiTFSI, which is a lithium salt, is applied on SS foil, which is a substrate, and then dried at 25 °C without freezing and thawing processes.

### Experimental Example

### Experimental Example 1

In order to measure the ionic conductivity of the polymer solid electrolytes in the form of films prepared in the Examples and the Comparative Examples, the polymer solid electrolyte was punched out in a circular shape with a size of 1.7671 cm², and the punched polymer solid electrolyte was placed between two sheets of stainless steel (SS) to prepare a coin cell.

### (1) Ionic conductivity

Using an electrochemical impedance spectrometer (EIS, VM3, Bio Logic Science Instrument), the resistance was measured under conditions of an amplitude of 10 mV and a scan range of 500 KHz to 20 MHz at 25 °C, and then, using Equation 2 below, the ionic conductivity of the polymer solid electrolyte was calculated. <Equation 2> ${σ}_{i} = \frac{L}{RA}$

In Equation 2 above, σi is the ionic conductivity (S/cm) of the polymer solid electrolyte, R is the resistance (Ω) of the polymer solid electrolyte measured by the electrochemical impedance spectrometer, L is the thickness(µm) of the polymer solid electrolyte, and A is the area(cm²) of the polymer solid electrolyte.

### (2) Possibility of forming the free-standing film and sample status after freezing/thawing processes

The ionic conductivity of the polymer solid electrolyte calculated using Equation 2 above, the possibility of forming a free-standing film, and the results of observing the appearance of the polymer solid electrolyte are described in Table 2 below. At this time, the possibility of forming the free-standing film (formation: o, non-formation: X) and the appearance of the polymer solid electrolyte were visually observed.

### (3) Liquid phase evaporation rate (M(t))

After measuring the weight before and after evaporation of the liquid phase (solvent) included in the polymer solid electrolyte during the manufacturing process of the Example and the Comparative Examples, the liquid phase evaporation rate (M(t)) was measured using a weight change rate.

### (4) M_{∞} and D

The calculated liquid phase evaporation rate (M(t)) was applied to Equation 1 below, and the values of M_{∞} and D, which are fitting parameters, were derived. <Equation 1> $\frac{M \left(t\right)}{{M}_{∞}} = 1 - \frac{8}{{Π}^{2}} {\sum }_{n = 0}^{∞} \frac{1}{{\left(2n+1\right)}^{2}} exp \left[-\frac{D {\left(2n+1\right)}^{2} {Π}^{2} t}{L}\right]$

The M_{∞} is a maximum value or a saturation value of the liquid phase that can be included in the polymer solid electrolyte, and is 0.2 to 0.6,
the D means a diffusion coefficient of the liquid phase in the polymer solid electrolyte, and is 10⁻⁹ cm²/s to 10⁻⁶ cm²/s,
the L means the thickness of the polymer solid electrolyte, and is 5 µm to 500 µm, and
the t means the time at which the liquid phase evaporation rate is measured.

**[Table 2]**

| | Ionic conductivity (S/cm) | Diffusion (D, cm²/sec) | M_{∞} | M(t) (t=5 min) | Possibility of forming the free-standing film | Sample status after freezing/ thawing process | Remarks |
|---|---|---|---|---|---|---|---|
| Example 1 | 2.2 x 10⁻⁴ | 2.7 x 10⁻⁸ | 0.4 | 0.266 | O | free-standing film | |
| Comparative Example 1 | not measurable | 5.5 x 10⁻⁸ | 0.1 | 0.079 | X | gel | Impossible to prepare uniform sample on substrate - Highly viscous gel form, not film form |
| Comparative Example 2 | 4.2 x 10⁻⁸ | 1.8 x 10⁻⁷ | 0.06 | 0.058 | X | film | Low mechanical strength of the film due to the absence of cross-linkage |

As shown in Table 2 above, it was confirmed that Example 1 had high ionic conductivity by satisfying all features of a large M_{∞} and a small diffusion coefficient.

## Claims

1. A polymer solid electrolyte, comprising:
a polymer containing a cross-linkable functional group;
a lithium salt; and
a solvent comprising a first solvent and a second solvent,
wherein the polymer solid electrolyte comprises a cross-linked structure; and an amorphous polymer chain containing a cross-linkable functional group,
the cross-linked structure comprises (a) a cross-linkage between cross-linkable functional groups, (b) a cross-linkage between the cross-linkable functional group and the first solvent, and (c) a bond between the cross-linkable functional group and the lithium salt,
a liquid phase evaporation rate (M(t)), which means the amount of evaporation over time of the solvent contained in the polymer solid electrolyte, is defined by Equation 1 below: <Equation 1> $\frac{M \left(t\right)}{{M}_{∞}} = 1 - \frac{8}{{Π}^{2}} {\sum }_{n = 0}^{∞} \frac{1}{{\left(2n+1\right)}^{2}} exp \left[-\frac{D {\left(2n+1\right)}^{2} {Π}^{2} t}{L}\right]$
wherein, M_{∞} is the maximum value or saturation value of a liquid phase that can be included in the polymer solid electrolyte, and is 0.2 to 0.6,
D is the diffusion coefficient of the liquid phase in the polymer solid electrolyte, and is 10⁻⁹ cm²/s to 10⁻⁶ cm²/s,
L is the thickness of the polymer solid electrolyte, and is 5 *µ*m to 500 *µ*m, and
t is a time at which the liquid phase evaporation rate is measured, all measurements are carried out as described in the description,
the content of the first solvent is 1 to 1000 ppm,
the first solvent comprises water,
the weight average molecular weight of the polymer containing the cross-linkable functional groups is 80,000 g/mol to 130,000 g/mol,
the second solvent comprises one or more selected from the group consisting of ethyl methyl carbonate (EMC), dimethyl carbonate (DMC), ethylene carbonate (EC), propylene carbonate (PC), vinylene carbonate (VC), diethyl carbonate (DEC), tetrahydrofuran (THF), 2-methyltetrahydrofuran (2-MeTHF), dioxolane (DOX), dimethoxyethane (DME), diethoxyethane (DEE), γ-butyrolactone (GBL), acetonitrile (AN), and sulfolane,
the cross-linkable functional group comprises a hydroxyl group, and the polymer containing a cross-linkable functional group comprises one or more selected from the group consisting of polyvinyl alcohol (PVA), agar, dextran, and chitosan,
the molar ratio ([Li]/[G]) of the cross-linkable functional group ([G]) of the polymer and lithium ([Li]) of the lithium salt is exceeding 0.1 and less than 0.5, and
the polymer solid electrolyte is obtainable by a method comprising the following steps:
(S1) preparing a solution for forming a polymer solid electrolyte by adding a lithium salt to a solution which contains a polymer containing a cross-linkable functional group and a first solvent;
(S2) forming a coating film by applying the solution for forming the polymer solid electrolyte on a substrate;
(S3) freezing and thawing the coating film to form a cross-linked structure of the polymer containing the cross-linkable functional group, thereby preparing a first polymer solid electrolyte, wherein the cross-linked structure of the polymer comprises the lithium salt and the first solvent; and
(S4) exchanging the first solvent in the first polymer solid electrolyte with a second solvent to prepare a second polymer solid electrolyte,
wherein the freezing is performed at -30°C to -10°C, and the thawing is performed at 15°C to 35°C.

2. The polymer solid electrolyte according to claim 1, wherein the lithium salt comprises at least one selected from the group consisting of LiTFSI(Lithium bis(trifluoromethanesulphonyl)imide), LiFSI(Lithium bis(fluorosulfonyl)imide), LiNO₃, LiOH, LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, CF₃SO₃Li, LiSCN, and LiC(CF₃SO₂)₃.

3. A method for preparing the polymer solid electrolyte according to claim 1, comprising the following steps:
(S1) preparing a solution for forming a polymer solid electrolyte by adding a lithium salt to a solution which contains a polymer containing a cross-linkable functional group and a first solvent;
(S2) forming a coating film by applying the solution for forming the polymer solid electrolyte on a substrate;
(S3) freezing and thawing the coating film to form a cross-linked structure of the polymer containing the cross-linkable functional group, thereby preparing a first polymer solid electrolyte, wherein the cross-linked structure of the polymer comprises the lithium salt and the first solvent; and
(S4) exchanging the first solvent in the first polymer solid electrolyte with a second solvent to prepare a second polymer solid electrolyte;
wherein the freezing is performed at -30 °C to -10 °C, and
the thawing is performed at 15 °C to 35 °C.

4. The method for preparing the polymer solid electrolyte according to claim 3, wherein the solvent exchange is performed by drying the first solvent contained in the first polymer solid electrolyte at a high temperature and then immersing it in the second solvent to exchange the first solvent with the second solvent.

5. An all-solid-state battery comprising the polymer solid electrolyte of any one of claims 1 to 2.

## Patentansprüche

1. Polymerer Festelektrolyt, umfassend:
ein Polymer, das eine vernetzbare funktionelle Gruppe enthält;
ein Lithiumsalz; und
ein Lösungsmittel, das ein erstes Lösungsmittel und ein zweites Lösungsmittel umfasst,
wobei der polymere Festelektrolyt eine vernetzte Struktur; und eine amorphe Polymerkette, die eine vernetzbare funktionelle Gruppe enthält, umfasst,
die vernetzte Struktur (a) eine Vernetzung zwischen vernetzbaren funktionellen Gruppen, (b) eine Vernetzung zwischen der vernetzbaren funktionellen Gruppe und dem ersten Lösungsmittel und (c) eine Bindung zwischen der vernetzbaren funktionellen Gruppe und dem Lithiumsalz umfasst,
eine Flüssigphasenverdampfungsrate (M(t)), die die Menge der Verdampfung des in dem polymeren Festelektrolyt enthaltenen Lösungsmittels über die Zeit bedeutet, durch die folgende Gleichung 1 definiert ist: <Gleichung 1> $\frac{M \left(t\right)}{{M}_{∞}} = 1 - \frac{8}{{Π}^{2}} {\sum }_{n = 0}^{∞} \frac{1}{{\left(2n+1\right)}^{2}} exp \left[-\frac{D {\left(2n+1\right)}^{2} {Π}^{2} t}{L}\right]$
wobei M_{∞} der Maximalwert oder Sättigungswert einer flüssigen Phase ist, die in dem polymeren Festelektrolyt enthalten sein kann, und 0,2 bis 0,6 beträgt,
D der Diffusionskoeffizient der flüssigen Phase in dem polymeren Festelektrolyt ist und 10⁻⁹ cm²/s bis 10⁻⁶ cm²/s beträgt,
L die Dicke des polymeren Festelektrolyten ist und 5 µm bis 500 µm beträgt, und
t eine Zeit ist, zu der die Flüssigphasenverdampfungsrate gemessen wird, wobei alle Messungen wie in der Beschreibung beschrieben durchgeführt werden,
der Gehalt des ersten Lösungsmittels 1 bis 1000 ppm beträgt,
das erste Lösungsmittel Wasser umfasst,
das gewichtsmittlere Molekulargewicht des Polymers, das die vernetzbaren funktionellen Gruppen enthält, 80.000 g/mol bis 130.000 g/mol beträgt,
das zweite Lösungsmittel eines oder mehrere ausgewählt aus der Gruppe bestehend aus Ethylmethylcarbonat (EMC), Dimethylcarbonat (DMC), Ethylencarbonat (EC), Propylencarbonat (PC), Vinylencarbonat (VC), Diethylcarbonat (DEC), Tetrahydrofuran (THF), 2-Methyltetrahydrofuran (2-MeTHF), Dioxolan (DOX), Dimethoxyethan (DME), Diethoxyethan (DEE), γ-Butyrolacton (GBL), Acetonitril (AN) und Sulfolan umfasst,
die vernetzbare funktionelle Gruppe eine Hydroxylgruppe umfasst und das Polymer, das eine vernetzbare funktionelle Gruppe enthält, eines oder mehrere ausgewählt aus der Gruppe bestehend aus Polyvinylalkohol (PVA), Agar, Dextran und Chitosan umfasst,
das Molverhältnis ([Li]/[G]) der vernetzbaren funktionellen Gruppe ([G]) des Polymers und Lithium ([Li]) des Lithiumsalzes mehr als 0,1 und weniger als 0,5 beträgt, und
der polymere Festelektrolyt durch ein Verfahren erhältlich ist, das die folgenden Schritte umfasst:
(S1) Herstellen einer Lösung zum Bilden eines polymeren Festelektrolyten durch Zugeben eines Lithiumsalzes zu einer Lösung, die ein Polymer, das eine vernetzbare funktionelle Gruppe enthält, und ein erstes Lösungsmittel enthält;
(S2) Bilden eines Beschichtungsfilms durch Aufbringen der Lösung zum Bilden des polymeren Festelektrolyten auf ein Substrat;
(S3) Einfrieren und Auftauen des Beschichtungsfilms, um eine vernetzte Struktur des Polymers, das die vernetzbare funktionelle Gruppe enthält, zu bilden, wodurch ein erster polymerer Festelektrolyt hergestellt wird, wobei die vernetzte Struktur des Polymers das Lithiumsalz und das erste Lösungsmittel umfasst; und
(S4) Austauschen des ersten Lösungsmittels in dem ersten polymeren Festelektrolyten mit einem zweiten Lösungsmittel, um einen zweiten polymeren Festelektrolyten herzustellen,
wobei das Einfrieren bei -30 °C bis -10 °C durchgeführt wird und das Auftauen bei 15 °C bis 35 °C durchgeführt wird.

2. Polymerer Festelektrolyt nach Anspruch 1, wobei das Lithiumsalz mindestens eines ausgewählt aus der Gruppe bestehend aus LiTFSI(Lithiumbis(trifluormethansulfonyl)imid), LiFSI(Lithiumbis(fluorsulfonyl)imid), LiNO₃, LiOH, LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, CF₃SO₃Li, LiSCN und LiC(CF₃SO₂)₃ umfasst.

3. Verfahren zum Herstellen des polymeren Festelektrolyten nach Anspruch 1, umfassend die folgenden Schritte:
(S1) Herstellen einer Lösung zum Bilden eines polymeren Festelektrolyten durch Zugeben eines Lithiumsalzes zu einer Lösung, die ein Polymer, das eine vernetzbare funktionelle Gruppe enthält, und ein erstes Lösungsmittel enthält;
(S2) Bilden eines Beschichtungsfilms durch Aufbringen der Lösung zum Bilden des polymeren Festelektrolyten auf ein Substrat;
(S3) Einfrieren und Auftauen des Beschichtungsfilms, um eine vernetzte Struktur des Polymers, das die vernetzbare funktionelle Gruppe enthält, zu bilden, wodurch ein erster polymerer Festelektrolyt hergestellt wird, wobei die vernetzte Struktur des Polymers das Lithiumsalz und das erste Lösungsmittel umfasst; und
(S4) Austauschen des ersten Lösungsmittels in dem ersten polymeren Festelektrolyten mit einem zweiten Lösungsmittel, um einen zweiten polymeren Festelektrolyten herzustellen;
wobei das Einfrieren bei -30 °C bis -10 °C durchgeführt wird und
das Auftauen bei 15 °C bis 35 °C durchgeführt wird.

4. Verfahren zum Herstellen des polymeren Festelektrolyten nach Anspruch 3, wobei der Lösungsmittelaustausch durch Trocknen des ersten Lösungsmittels, das in dem ersten polymeren Festelektrolyten enthalten ist, bei einer hohen Temperatur und dann Eintauchen desselben in das zweite Lösungsmittel, um das erste Lösungsmittel mit dem zweiten Lösungsmittel auszutauschen, durchgeführt wird.

5. Vollfestkörperbatterie, umfassend den polymeren Festelektrolyten nach einem der Ansprüche 1 bis 2.

## Revendications

1. Électrolyte solide polymère, comprenant :
un polymère contenant un groupe fonctionnel réticulable ;
un sel de lithium ; et
un solvant comprenant un premier solvant et un deuxième solvant,
dans lequel l'électrolyte solide polymère comprend une structure réticulée ; et une chaîne polymère amorphe contenant un groupe fonctionnel réticulable,
la structure réticulée comprend (a) une réticulation entre des groupes fonctionnels réticulables, (b) une réticulation entre le groupe fonctionnel réticulable et le premier solvant et (c) une liaison entre le groupe fonctionnel réticulable et le sel de lithium,
un taux d'évaporation en phase liquide (M(t)), qui indique la quantité d'évaporation dans le temps du solvant contenu dans l'électrolyte solide polymère, est défini par l'Équation 1 ci-dessous : <Equation 1> $\frac{M \left(t\right)}{{M}_{∞}} = 1 - \frac{8}{{Π}^{2}} {\sum }_{n = 0}^{∞} \frac{1}{{\left(2n+1\right)}^{2}} exp \left[-\frac{D {\left(2n+1\right)}^{2} {Π}^{2} t}{L}\right]$
dans lequel, M_{∞} est la valeur maximum ou valeur de saturation d'une phase liquide qui peut être inclue dans l'électrolyte solide polymère, et est 0,2 à 0,6,
D est le coefficient de diffusion de la phase liquide dans l'électrolyte solide polymère, et est 10⁻⁹ cm²/s à 10⁻⁶ cm²/s,
L est l'épaisseur de l'électrolyte solide polymère, et est 5 µm à 500 µm, et
t est un point dans le temps où le taux d'évaporation en phase liquide est mesuré, toutes les mesures sont effectuées comme décrit dans la description,
la teneur du premier solvant est 1 à 1000 ppm,
le premier solvant comprend de l'eau,
le poids moléculaire moyen en poids du polymère contenant les groupes fonctionnels réticulables est 80 000 g/mol à 130 000 g/mol,
le deuxième solvant comprend un ou plusieurs éléments sélectionnés dans le groupe constitué de carbonate d'éthyle méthyle (EMC), carbonate de diméthyle (DMC), carbonate d'éthylène (EC), carbonate de propylène (PC), carbonate de vinylène (VC), carbonate de diéthyle (DEC), tétrahydrofurane (THF), 2-méthyltétrahydrofurane (2-MéthF), dioxolane (DOX), diméthoxyéthane (DME), diéthoxyéthane (DEE), γ-butyrolactone (GBL), acétonitrile (AN) et sulfolane,
le groupe fonctionnel réticulable comprend un groupe hydroxyle, et le polymère contenant un groupe fonctionnel réticulable comprend un ou plusieurs éléments sélectionnés dans le groupe constitué d'alcool polyvinylique (PVA), agar, dextrane et chitosane,
le rapport molaire ([Li]/[G]) du groupe fonctionnel réticulable ([G]) du polymère et du lithium ([Li]) du sel de lithium est supérieur à 0,1 et inférieur à 0,5, et
l'électrolyte solide polymère est obtenable par un procédé comprenant les étapes suivantes consistant à :
(S1) préparer une solution pour former un électrolyte solide polymère en ajoutant un sel de lithium à une solution qui contient un polymère contenant un groupe fonctionnel réticulable et un premier solvant ;
(S2) former un film de revêtement en appliquant la solution pour former l'électrolyte solide polymère sur un substrat ;
(S3) congeler et décongeler le film de revêtement pour former une structure réticulée du polymère contenant le groupe fonctionnel réticulable, et ainsi préparer un premier électrolyte solide polymère, dans lequel la structure réticulée du polymère comprend le sel de lithium et le premier solvant ; et
(S4) échanger le premier solvant dans le premier électrolyte solide polymère par un deuxième solvant pour préparer un deuxième électrolyte solide polymère,
dans lequel la congélation est effectuée à -30°C à -10°C, et la décongélation est effectuée à 15°C à 35°C.

2. Électrolyte solide polymère selon la revendication 1, dans lequel le sel de lithium comprend un ou plusieurs éléments sélectionnés dans le groupe constitué de LiTFSI(Lithium bis(trifluorométhanesulphonyl)imide), LiFSI(Lithium bis(fluorosulfonyl)imide), LiNO₃, LiOH, LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, CF₃SO₃Li, LiSCN et LiC(CF₃SO₂)₃.

3. Procédé de préparation de l'électrolyte solide polymère selon la revendication 1, comprenant les étapes suivantes consistant à :
(S1) préparer une solution pour former un électrolyte solide polymère en ajoutant un sel de lithium à une solution qui contient un polymère contenant un groupe fonctionnel réticulable et un premier solvant ;
(S2) former un film de revêtement en appliquant la solution pour former l'électrolyte solide polymère sur un substrat ;
(S3) congeler et décongeler le film de revêtement pour former une structure réticulée du polymère contenant le groupe fonctionnel réticulable, et ainsi préparer un premier électrolyte solide polymère, dans lequel la structure réticulée du polymère comprend le sel de lithium et le premier solvant ; et
(S4) échanger le premier solvant dans le premier électrolyte solide polymère par un deuxième solvant pour préparer un deuxième électrolyte solide polymère ;
dans lequel la congélation est effectuée à -30°C à -10°C, et
la décongélation est effectuée à 15°C à 35°C.

4. Procédé de préparation de l'électrolyte solide polymère selon la revendication 3, dans lequel l'échange de solvant est effectué en séchant le premier solvant contenu dans le premier électrolyte solide polymère à une température élevée, puis en l'immergeant dans le deuxième solvant pour échanger le premier solvant par le deuxième solvant.

5. Batterie tout-solide comprenant l'électrolyte solide polymère selon l'une quelconque des revendications 1 à 2.
